# EUROPÄISCHE PATENTSCHRIFT

(11) **EP 1 588 070 B1**
(45) Veröffentlichungstag und Bekanntmachung des Hinweises auf die Patenterteilung: **28.06.2006**
(21) Anmeldenummer: 03785914.7
(22) Anmeldetag: 22.12.2003
(51) Int. Cl.: F16D 65/097, F16D 55/00

(54) **SCHEIBENBREMSE, INSBESONDERE FÜR EIN NUTZFAHRZEUG**
DISC BRAKE, PARTICULARLY FOR A GOODS VEHICLE
FREIN A DISQUE, NOTAMMENT POUR VEHICULE UTILITAIRE

(30) Priorität: 22.01.2003 DE 10302332
(43) Veröffentlichungstag der Anmeldung: 26.10.2005
(73) Patentinhaber: KNORR-BREMSE SYSTEME FÜR NUTZFAHRZEUGE GMBH, 80809 München (DE)
(72) Erfinder: LINKE, Tobias, 61118 Bad Vilbel (DE); MACKE, Wlodzimierz, 82140 Olching (DE)
(74) Vertreter: Mattusch, Gundula
(86) Internationale Anmeldenummer: PCT/EP2003/014727
(87) Internationale Veröffentlichungsnummer: WO 2004/065813

(56) Entgegenhaltungen:
- EP-A- 0 703 378
- EP-A- 0 877 176
- EP-B- 0 534 987
- US-A- 4 773 511

## Beschreibung

Die vorliegende Erfindung betrifft eine Scheibenbremse, insbesondere für ein Nutzfahrzeug, gemäß dem Oberbegriff des Anspruchs 1.

Eine derartige Scheibenbremse ist beispielsweise aus der EP 0 534 987 B1 bekannt. Der Haltebügel dieser Scheibenbremse dient im wesentlichen dazu, für Federn, in diesem Fall Blattfedern, die die Bremsbacken federnd verspannen, ein Widerlager zu bilden. Der Haltebügel ist lösbar, um sowohl eine schnelle Montage wie auch Demontage vor allem der Bremsbacken zu gewährleisten. Letztere beispielsweise, um einen für einen Bremsbelagwechsel notwendigen Zugriff auf die Bremsbacken problemlos zu ermöglichen.

Hierzu trägt auch bei, daß der Haltebügel mit einfachen Mitteln an- und abzubauen ist, wozu er einerseits in eine Ausnehmung des Bremssattels eingesteckt ist und andererseits mit dem Bremssattel, unter Überbrückung einer Einstecköffnung für die Bremsbacken, fest verbunden ist, beispielsweise durch Verschrauben.

Die Halterung des Bremssattels für den Haltebügel befindet sich üblicherweise in einem der Verschlußplatte benachbarten Bereich und wird beim Gießen des als Gußteil hergestellten Bremssattels mit eingebracht.

Allerdings sind hierzu Maßnahmen erforderlich, die einer einfachen und rationellen Herstellung des Bremssattels entgegenstehen. So ist zur Ausbildung der taschenförmigen Halterung ein zusätzlicher, auf den Sattelkern aufzusteckender Kern erforderlich, was naturgemäß nur mit einem Mehr an Fertigungsaufwand realisierbar ist.

Diesem Umstand kommt in betriebswirtschaftlicher Hinsicht auch deshalb eine besondere Bedeutung zu, da solche Scheibenbremsen als Serienprodukte in großen Stückzahlen hergestellt werden.

Der vorliegenden Erfindung liegt daher die Aufgabe zugrunde, eine Scheibenbremse der gattungsgemäßen Art so weiter zu entwickeln, daß sie konstruktiv einfacher aufgebaut und kostengünstiger herstell- und montierbar ist.

Diese Aufgabe wird durch eine Scheibenbremse gelöst, die die Merkmale des Anspruchs 1 aufweist.

Eine solche Scheibenbremse zeichnet sich vor allem dadurch aus, daß sie rationeller herstell- und montierbar ist. Da auf eine bremssattelseitige Halterung für den Haltebügel verzichtet wird, ist die Herstellung des Bremssattels als Gußteil einfacher zu bewerkstelligen, vor allem, weil kein zusätzlicher Kern eingebracht werden muß.

Andererseits kann eine entsprechende Halterung in oder an der Verschlußplatte, wobei letztere als Stanz- Biegeteil aus Blech hergestellt ist, problemlos ohne zusätzlichen Arbeitsaufwand hergestellt werden. Naturgemäß ergibt sich hieraus nicht nur eine kostengünstigere Fertigung, sondern auch die Vermeidung von Ausschuß, wie er bei einem Eingießen der Halterung durchaus vorkommen kann. Unter Einschluß der Vereinfachung des Gießkerns wird demnach der Gießprozeß insgesamt optimiert.

Des weiteren wird durch die Erfindung eine hinsichtlich der Lagegenauigkeit des Haltebügels geringere Toleranzbreite erreicht, die eine genauere Fixierung der Bremsbacken zur Folge hat, insbesondere durch die Verringerung des Streubereiches der Vorspannung der Blattfedern, was bislang nur durch eine zusätzliche Bearbeitung möglich ist.

Als weiterer Fertigungsvorteil ist die Reduzierung der Bearbeitung der Dichtfläche des Bremsträgers zur Verschlußplatte zu nennen, die ebenso zu einer fertigungstechnischen Optimierung beiträgt wie eine sich ergebende Materialeinsparung.

Nach einer vorteilhaften Weiterbildung der Erfindung ist vorgesehen, den Fomischluß des Haltebügels mit der Verschlußplatte dadurch zu erreichen, daß in dieser eine Halterung vorgesehen ist, in die der Haltebügel endseitig eingesteckt ist. Die Halterung kann als Schlitz ausgebildet sein, der in seiner Kontur und seinen Abmaßen denen des Haltebügels entspricht. Dabei kann der Schlitz offen ausgestanzt oder als Tasche ausgebildet sein, die dann den Haltebügel im einliegenden Endbereich vollständig umschließt.

Während durch die taschenförmige Ausbildung des Schlitzes eine ausreichende Stabilität der Verschlußplatte in diesem Bereich gegeben ist, wird diese bei einem offenen Schlitz dadurch erreicht, daß zwei sich gegenüber liegende oder umlaufende Rippen vorgesehen sind, die sich abgewinkelt von der Fläche der Verschlußplatte im übrigen in Längsrichtung des Haltebügels erstrecken. Anstelle stabilitätserhöhender Rippen können auch Sicken oder dergleichen Verformungen vorgesehen sein.

Zur Versteifung der aus Blech geformten Verschlußplatte kann eine teilweise oder gänzlich umlaufende, den Außenrand bildende Rippe in Form einer Abwinklung vorgesehen sein.

Diese ist auch dann sinnvoll, wenn nach einem weiteren Gedanken der Erfindung zum Formschluß in Form einer Lasche mit einer diese 3-seitig begrenzenden Wandung gestaltet ist, in der der Haltebügel einliegt, wobei die Fixierung des Haltebügels durch die die Lasche begrenzende Wandung einerseits und durch die zugeordnete Blattfeder andererseits erfolgt.

In jedem Fall ist die Fixierung der Blattfeder nun mit sehr einfachen Fertigungsmaßnahmen, d.h., mit einer wenig aufwendigen Bearbeitung möglich, nämlich lediglich durch entsprechende Formgebung der Verschlußplatte beim Stanzen, wozu nur das Stanzwerkzeug entsprechend zu gestalten ist.

Weitere vorteilhafte Ausbildungen der Erfindung sind in den Unteransprüchen gekennzeichnet.

Ausführungsbeispiele der Erfindung werden nachfolgend anhand der beigefügten Zeichnungen beschrieben.

Es zeigen:
- Figur 1: einen Teilausschnitt einer erfindungsgemäßen Scheibenbremse in einer perspektivischen Ansicht,
- Figur 2: eine Einzelheit der Scheibenbremse nach Figur 1, gesehen in Richtung des Pfeiles II in Figur 1,
- Figur 3: ein weiteres Ausführungsbeispiel einer Scheibenbremse, ebenfalls in einem perspektivisch dargestellten Teilausschnitt,
- Figur 4: eine Einzelheit der Scheibenbremse nach Figur 3, gesehen in Richtung des Pfeiles IV in Figur 3.

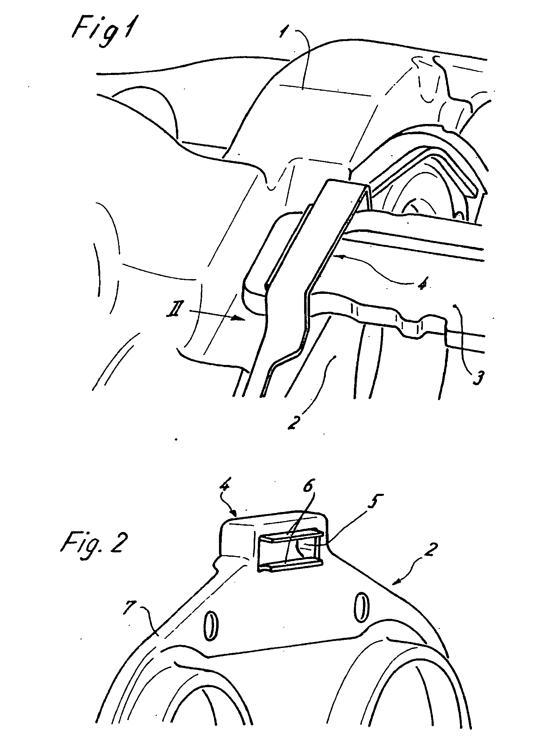

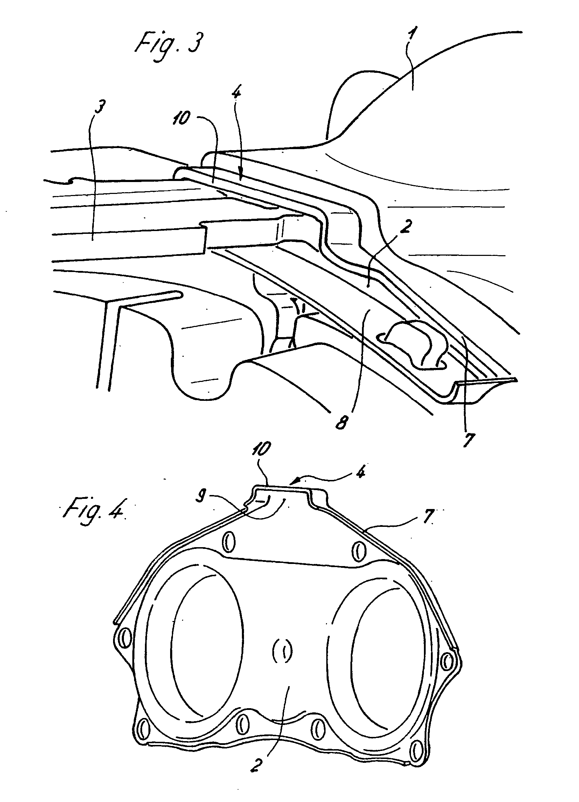

In den Figuren 1 und 3 ist jeweils eine Scheibenbremse, insbesondere für ein Nutzfahrzeug, in einem Ausschnitt dargestellt, die einen Bremssattel 1 aufweist, der hier auf einer nicht dargestellten, einer Bremsscheibe zugewandten Seite mit einer Verschlußplatte 2 verschlossen ist. Hinter der Verschlußplatte 2 liegt eine Zuspanneinrichtung.

Ebenfalls nicht dargestellte Bremsbacken werden durch Blattfedern 8 (Figur 3) unter Federspannung niedergehalten, die sich andererseits an einem Haltebügel 3 abstützen, der formschlüssig in der Verschlußplatte 2 einliegt.

Hierzu weist die Verschlußplatte 2 eine Halterung 4 auf, die, im Ausführungsbeispiel gemäß den Figuren 1 und 2, aus einem ausgestanzten Schlitz 5 besteht, der ober- und unterseitig mit zwei abgewinkelten Rippen 6 versehen ist, die jedoch auch umlaufend, also den Schlitz 5 einfassend ausgebildet sein können und die der Verstärkung hinsichtlich einer Stabilitätserhöhung dienen.

Wie insbesondere die Figur 1 sehr deutlich zeigt, ist der Haltebügel 3 durch den Schlitz 5 gesteckt, der in seiner rechteckigen Kontur sowohl im Abmaß wie auch Form dem Querschnitt des Haltebügels 3 entspricht. Anstelle des offenen Schlitzes 5 kann die Halterung 4 auch mit einem geschlossenen Boden versehen sein, so daß der Haltebügel 3 mit seinem zugeordneten Endbereich einliegt, jedoch nicht herausragt.

Bei dem in den Figuren 3 und 4 gezeigten Beispiel weist die Verschlußplatte 2 zur formschlüssigen Halterung des Haltebügels 3 eine planeben zur Grundfläche der Verschlußplatte 2 sich erstreckende Lasche 9 auf, die dreiseitig von einer gegenüber der Verschlußplatte 2 im übrigen abgewinkelten Wandung 10 begrenzt ist und an der der Haltebügel 3 anliegt. Dabei bilden die Wandungen 10 eine Versteifung der Verschlußplatte 2, vergleichbar den Rippen 6 im Ausführungsbeispiel nach den Figuren 1 und 2. Gegenüber dem darin verwendeten Haltebügel 3 ist er entsprechend den Figuren 3 und 4 etwas kürzer dimensioniert, da er maximal an der Fläche der Verschlußplatte 2 anliegt.

Die Wandungen 10 bzw. die außenseitige Begrenzung der Halterung 4 findet ihre Fortsetzung in Rippen 7, die sich beidseitig über einen Teilbereich am Außenrand der Verschlußplatte 2 erstrecken und zu einer Erhöhung der Biegesteifigkeit beitragen. Dabei verlaufen die Rippen 7 abgewinkelt zur Fläche der Verschlußplatte 2 im übrigen.

### Bezugszeichenliste

- 1: Bremssattel
- 2: Verschlußplatte
- 3: Haltebügel
- 4: Halterung
- 5: Schlitz
- 6: Rippe
- 7: Rippe
- 8: Blattfeder
- 9: Lasche
- 10: Wandung

## Patentansprüche

1. Scheibenbremse, insbesondere für ein Nutzfahrzeug, mit einem Bremssattel (1), der eine mit Bremsbacken in Wirkverbindung bringbare Bremsscheibe aufweist und an einem Bremsträger, bezogen auf die Bremsscheibe, axial verschiebbar befestigt ist, wenigstens einer, den Bremssattel (1), insbesondere auf einer der der Bremsscheibe zugewandten Seiten verschließenden Verschlußplatte (2) sowie einem lösbaren, gegenüber dem Bremssattel (1) feststehenden Haltebügel (3), an dem sich auf die Außenkanten der Bremsbacken einwirkende Federn (8) abstützen, **dadurch gekennzeichnet, daß** in oder an der Verschlußplatte (2) eine Halterung (4) vorgesehen ist, in der das zugewandte Ende des Haltebügels (3) in Belastungsrichtung gehalten einliegt.

2. Scheibenbremse nach Anspruch 1 oder 2, **dadurch gekennzeichnet, daß** die Halterung (4) einen offenen Schlitz (5) aufweist, in den der Haltebügel (3) eingesteckt ist.

3. Scheibenbremse nach Anspruch 2, **dadurch gekennzeichnet, daß** der Schlitz (5) zumindest einseitig durch eine abgewinkelte Rippe (6) begrenzt ist.

4. Scheibenbremse nach Anspruch 3, **dadurch gekennzeichnet, daß** die Rippe (6) umlaufend, den Schlitz (5) umschließend, ausgebildet ist.

5. Scheibenbremse nach Anspruch 3, **dadurch gekennzeichnet, daß** der Schlitz taschenförmig gestaltet ist und einen geschlossenen Boden aufweist.

6. Scheibenbremse nach Anspruch 1, **dadurch gekennzeichnet, daß** die Verschlußplatte (2) als Halterung (4) eine durch eine dreiseitige Wandung (10) begrenzte Lasche aufweist.

7. Scheibenbremse nach Anspruch 6, **dadurch gekennzeichnet, daß** die Lasche (9) planeben mit dem übrigen, angrenzenden Bereich der Verschlußplatte (2) verläuft.

8. Scheibenbremse nach einem der Ansprüche 1 bis 7, **dadurch gekennzeichnet, daß** die Halterung (4) der Verschlußplatte (2) durch Stanzen gebildet ist.

9. Scheibenbremse nach einem der Ansprüche 1 bis 8, **dadurch gekennzeichnet, daß** die Abmaße und Kontur des Schlitzes (5) bzw. der Lasche (9) den Abmaßen und der Kontur des Haltebügels (3) entsprechen.

10. Scheibenbremse nach Anspruch 2, **dadurch gekennzeichnet, daß** die insbesondere der Halterung (4) benachbartren Randbereiche der Verschlußplatte (2) zumindest bereichsweise mit einer Rippe (7) versehen sind.

## Claims

1. Disc brake, in particular for a utility vehicle, with a brake caliper (1) having a brake disc which can be mounted so as to actively connect with brake pads and is secured on a brake carrier so as to be axially displaceable relative to the brake disc, at least one closure plate (2) closing off one of the sides of the brake disc directed towards the brake caliper (1) in particular, as well as a detachable retaining bracket (3) which is stationary relative to the brake caliper (1) on which springs (8) acting on the outer edges of the brake pads are supported, **characterised in that** a retaining means (4) is provided in or on the closure plate (2), in which the facing end of the retaining bracket (3) lies secured in the application direction.

2. Disc brake as claimed in claim 1 or 2, **characterised in that** the retraining means (4) has an open slot (5), in which the retaining bracket (3) is inserted.

3. Disc brake as claimed in claim 2, **characterised in that** the slot (5) is bounded on at least one side by an angled rib (6).

4. Disc brake as claimed in claim 3, **characterised in that** the rib (6) is designed to extend around and enclose the slot (5).

5. Disc brake as claimed in claim 3, **characterised in that** the slot is of a gusset-shaped design and has a closed base.

6. Disc brake as claimed in claim 1, **characterised in that** the closure plate (2) has a retaining means (4) in the form of a gusset plate bounded by a three-sided wall (10).

7. Disc brake as claimed in claim 6, **characterised in that** the gusset plate (9) extends flat in the same plane as the rest of the adjoining region of the closure plate (2).

8. Disc brake as claimed in one of claims 1 to 7, **characterised in that** the retaining means (4) of the closure plate (2) is produced by a punching process.

9. Disc brake as claimed in one of claims 1 to 8, **characterised in that** the dimensions and contour of the slot (5) respectively the gusset plate (9) correspond to the dimensions and contour of the retaining bracket (3).

10. Disc brake as claimed in claim 2, **characterised in that** the peripheral regions of the closure plate (2) adjacent to the retaining means (4) in particular are provided with a rib (7).

## Revendications

1. Frein à disque, notamment pour un véhicule utilitaire, comprenant un étrier de frein (1) renfermant un disque de frein apte à être porté en raccord d'action avec des mâchoires de frein et fixé à un support de frein pour déplacement axial relatif au disque de frein, et comprenant au moins une plaque de fermeture (2) fermant ledit étrier de frein (1), en particulier d'un côté en face du disque de frein, ainsi qu'un étrier de retenue (3) mobile, stationnaire vis-à-vis ledit étrier de frein (1), auquel s'appuient des ressorts (8) agissant sur les bords extérieurs desdites mâchoires de frein, **caractérisé en ce qu'**une bride d'attache (4) est disposée dans ou à ladite plaque de fermeture (2), dans laquelle l'extrémité en face dudit étrier de retenue (3) est portée et retenue en sens de charge.

2. Frein à disque selon la revendication 1, **caractérisé en ce que** ladite bride d'attache présente une fente ouverte (5) dans laquelle est inséré ledit étrier de retenue (3).

3. Frein à disque selon la revendication 2, **caractérisé en ce que** ladite fente (5) est restreinte, au moins d'un côté, par une nervure (6) pliée.

4. Frein à disque selon la revendication 3, **caractérisé en ce que** ladite nervure (6) présente une configuration circonférentielle, qui entoure ladite fente (5).

5. Frein à disque selon la revendication 3, **caractérisé en ce que** ladite fente a une configuration en poche et présente un fond fermé.

6. Frein à disque selon la revendication 1, **caractérisé en ce que** ladite plaque de fermeture (2) comprend, en tant qu'une bride d'attache, un collier de fixation limité par une paroi (10) à trois côtés.

7. Frein à disque selon la revendication 6, **caractérisé en ce que** ledit collier de fixation (9) s'étend au plan plat relativement à la zone restante adjacente de ladite plaque de fermeture (2).

8. Frein à disque selon une quelconque des revendications 1 à 7, **caractérisé en ce que** ladite bride d'attache (4) de ladite plaque de fermeture (2) est formée par découpage.

9. Frein à disque selon une quelconque des revendications 1 à 8, **caractérisé en ce que** les dimensions et le contour de ladite fente (5) ou respectivement dudit collier de fixation (9) correspondent aux dimensions et au contour dudit étrier de retenue (3).

10. Frein à disque selon la revendication 2, **caractérisé en ce que** les zones de bord adjacentes à ladite bride d'attache (4), en particulier, de ladite plaque de fermeture (2) sont munies, au moins dans des zones partielles, d'une nervure (7).
